# FASCICULE DE BREVET EUROPEEN

(11) **EP 3 762 247 B1**
(45) Date de publication et mention de la délivrance du brevet: **06.04.2022**
(21) Numéro de dépôt: 19759638.0
(22) Date de dépôt: 04.02.2019
(51) Int. Cl.: B60K 1/04

(54) **PROCÉDÉ DE MONTAGE D'UN CÂBLE CONDUCTEUR ENTRE DEUX BATTERIES D'UN VÉHICULE AUTOMOBILE HYBRIDE OU ÉLECTRIQUE**
VERFAHREN ZUR MONTAGE EINES STROMKABELS ZWISCHEN ZWEI BATTERIEN EINES HYBRID- ODER ELEKTRO-KRAFTFAHRZEUGS
METHOD OF MOUNTING A CONDUCTOR CABLE BETWEEN TWO BATTERIES OF A HYBRID OR ELECTRIC MOTOR VEHICLE

(30) Priorité: 09.03.2018 FR 1852037
(43) Date de publication de la demande: 13.01.2021
(73) Titulaire: PSA Automobiles SA, 78300 Poissy (FR)
(72) Inventeur: CONVERS, Germain, 70290 CHAMPAGNEY (FR)
(86) Numéro de dépôt international: PCT/FR2019/050243
(87) Numéro de publication internationale: WO 2019/170970

(56) Documents cités:
- EP-A1- 2 101 089
- WO-A1-2017/060577
- US-A1- 2012 125 702
- US-A1- 2013 162 075

## Description

L'invention a trait au domaine des véhicules automobiles à motorisation hybride thermique et électrique et aux véhicules à motorisation électrique et plus particulièrement à la connexion entre deux batteries disposées, l'une à l'intérieur et l'autre à l'extérieur d'un habitacle du véhicule.

Les véhicules automobiles à motorisation hybride thermique et électrique (rechargeables ou non) et les véhicules automobiles à motorisation électrique comprennent des batteries alimentant en énergie électrique les moteurs électriques du véhicule.

Plus la capacité et/ou le nombre de batteries présentes dans le véhicule est important, plus l'autonomie du véhicule est grande. En contrepartie, les batteries occupent une place considérable grevant, généralement, les volumes disponibles dans le compartiment moteur, sous le plancher et/ou dans le coffre des véhicules.

Afin de pallier une diminution de ces volumes tout en maximisant une autonomie des véhicules automobiles à motorisation hybride thermique et électrique et des véhicules automobiles à motorisation électrique, une batterie additionnelle peut être ajoutée dans l'habitacle du véhicule.

Les dispositifs électriques ou électroniques disposés dans l'habitacle des véhicules sont généralement connectés aux dispositifs disposés à l'extérieur de l'habitacle par le biais d'un câble conducteur traversant un trou d'un tablier avant d'une surface structurée inférieure d'une caisse du véhicule, le tablier avant étant la paroi séparant l'habitacle du véhicule et le compartiment moteur.

Afin de réduire les coûts de conception et de fabrication ainsi que d'augmenter la qualité et la fiabilité des véhicules, les constructeurs conçoivent des plateformes dites modulaires utilisées comme base pour différents modèles de véhicules. Les plateformes comprennent, par exemple, le moteur, l'échappement, le châssis, les trains du véhicule.

Certaines plateformes permettent le montage de véhicules à moteur thermique et de véhicules hybrides comprenant un moteur thermique et un moteur électrique. Lorsque de telles plateformes sont utilisées pour le montage de véhicules hybrides, une ouverture prévue pour le passage de câbles d'une boîte de vitesses mécanique est sans utilité et doit être obturée pour réduire les échanges phoniques entre l'intérieur et l'extérieur de l'habitacle.

Le document WO2017060577A1 décrit un véhicule automobile comprenant une surface structurée inférieure de la caisse dans laquelle est formée une saillie longitudinale définissant un tunnel, la saillie longitudinale étant munie d'une ouverture destinée à laisser passer des câbles d'une boîte de vitesses mécanique. Lorsque la boîte de vitesses du véhicule n'est pas mécanique, un obturateur, présentant une forme complémentaire à la forme de l'ouverture, est fixé à la saillie longitudinale, au niveau de l'ouverture de sorte à obturer cette dernière. L'obturateur décrit dans ce document comprend une première partie disposée dans le tunnel, entre un écran thermique et la saillie longitudinale, et une deuxième partie dépassant de la saillie longitudinale dans l'habitacle du véhicule, à l'opposé de l'écran thermique. L'obturateur permet de limiter la remontée de bruits dans l'habitacle.

Dans le procédé d'assemblage du véhicule, l'écran thermique est soulevé jusqu'au couplage avec la surface structurée, ce couplage étant appelé le coiffage. L'obturateur est disposé sur l'écran thermique de sorte que la deuxième partie s'insère dans l'ouverture lors du coiffage. La deuxième partie de l'obturateur comprend une paroi externe et des nervures. La paroi externe présente sensiblement la forme de l'ouverture. Les nervures s'étendent sensiblement vers un centre défini par la paroi externe et présentent une largeur qui décroît depuis la paroi externe en s'éloignant de la première partie vers la deuxième partie de sorte à guider l'obturateur lors de son introduction au travers de l'ouverture.

Un tel obturateur permet effectivement de réduire les remontées de bruits dans l'habitacle et une insertion simplifiée de l'obturateur dans l'ouverture. Cependant, dans les véhicules hybrides ou électriques, afin de connecter les dispositifs disposés dans l'habitacle aux dispositifs disposés à l'extérieur de l'habitacle, lorsque les câbles conducteurs traversant le tablier avant de la surface structurée occupent tous les trous du tablier avant, l'obturateur empêche l'ajout de nouveaux câbles conducteurs traversant l'ouverture de la saillie longitudinale.

De plus, une fois la surface structurée coiffée sur l'écran thermique, l'accès au tunnel présent entre la saillie longitudinale et l'écran thermique est grandement compliqué.

Un procédé d'équipement d'une plateforme modulaire d'un véhicule automobile est connu du document EP 2 101 089 A1.

L'objectif est de proposer un procédé simple de montage d'un câble conducteur reliant deux batteries disposées, l'une à l'intérieur et l'autre à l'extérieur d'un habitacle d'un véhicule automobile, le câble conducteur traversant une ouverture formée dans une saillie longitudinale d'une surface structurée du véhicule automobile.

A cet effet, il est proposé un procédé d'équipement d'une plateforme modulaire d'un véhicule automobile comprenant une ouverture réservée, l'ouverture étant réalisée dans une saillie longitudinale d'une surface structurée inférieure d'une caisse de la plateforme modulaire, l'ouverture étant réalisée dans la surface structurée suivant une direction sensiblement perpendiculaire à la direction dans laquelle s'étend la saillie longitudinale, le procédé comprenant :
- une étape de positionnement d'un obturateur sur un environnement sous caisse de la plateforme modulaire ;
- une étape de coiffage de l'environnement sous caisse par la surface structurée, l'obturateur étant guidé par rapport à l'ouverture par un outil de guidage ; l'outil de guidage comprenant une base en contact avec l'obturateur et une tête disposée à l'opposé de la base, l'outil de guidage présentant une forme allant en s'évasant depuis la tête vers la base ; la tête de l'outil de guidage s'insérant en première dans l'ouverture ;
   le procédé comprenant :
- une étape de connexion d'un câble conducteur à une batterie interne à un habitacle du véhicule automobile de sorte que le câble conducteur relie la batterie interne et une batterie externe à l'habitacle du véhicule automobile, la batterie interne et la batterie externe étant disposées de part et d'autre de la surface structurée ; l'obturateur comprenant un passe-gaine traversé par le câble conducteur ; le câble conducteur étant disposé dans un tunnel défini par la saillie longitudinale, le tunnel étant disposé entre l'environnement sous caisse et la surface structurée ; et
- une étape de liaison d'un moteur électrique du véhicule automobile à la batterie interne et à la batterie externe.

Le procédé décrit ci-dessus propose un montage simple d'un câble conducteur reliant des batteries disposées, l'une à l'intérieur et l'autre à l'extérieur d'un habitacle d'un véhicule automobile lorsque tous les trous du tablier avant sont occupés par les câbles conducteurs traversant le tablier avant. Le procédé permet également une augmentation de l'autonomie d'un véhicule comprenant un moteur électrique tout en réduisant les remontées de bruits dans l'habitacle.

Diverses caractéristiques supplémentaires peuvent être prévues, seules ou en combinaison :
- le procédé comprend une étape de pose de l'outil de guidage sur de l'obturateur de sorte à simplifier la désolidarisation ultérieure de l'outil de guidage et de l'obturateur, à augmenter la vitesse de réalisation de celle-ci et à gagner de la place dans l'habitacle ;
- le procédé comprend, après l'étape de coiffage, une étape de désolidarisation de l'outil de guidage et de l'obturateur de sorte à gagner de la place dans l'habitacle ;
- le procédé comprend, après l'étape de coiffage, une étape de fixation de l'obturateur à la surface structurée par le biais de vis de sorte que des parois de l'obturateur obturent entièrement l'ouverture réduisant les échanges phoniques de part et d'autre de la structure caisse ;
- dans l'étape de connexion, la batterie interne est reliée à un commutateur, le commutateur étant destiné à sélectionner l'utilisation de la batterie interne ou de la batterie externe ;
- dans l'étape de connexion, le commutateur est protégé par un fusible destiné à protéger le commutateur d'une surtension ;
- avant l'étape de positionnement de l'obturateur, le passe-gaine est introduit dans une paroi de l'obturateur de sorte que le passe-gaine définisse une direction sensiblement parallèle à la direction définie par la saillie longitudinale aux abords de l'ouverture de sorte à augmenter le volume disponible dans l'habitacle ;
- le procédé comprend une étape de constitution de l'environnement sous caisse par l'assemblage d'un conduit d'échappement et d'un écran thermique de sorte que, après l'étape de coiffage, l'écran thermique soit disposé entre le conduit d'échappement et la surface structurée ;
- le procédé comprend, en amont de l'étape de liaison du moteur électrique, une étape de montage d'une motorisation entièrement électrique ;
- le procédé comprend, en amont de l'étape de liaison du moteur électrique, une étape de montage d'une motorisation hybride thermique et électrique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique en perspective d'un habitacle d'un véhicule automobile comprenant une surface structurée munie d'une ouverture, un commutateur, une batterie interne et des câbles électriques reliant le commutateur et la batterie interne ;
- la figure 2 est une vue schématique en coupe de l'habitacle du véhicule automobile suivant le plan II de la figure 1 ;
- les figures 3 et 4 sont des vues schématiques en perspective d'un obturateur et d'un câble conducteur ;
- la figure 5 est une vue schématique en perspective de l'obturateur et d'un outil de guidage posés l'un sur l'autre ;
- la figure 6 est une vue schématique en coupe de l'obturateur et de l'outil de guidage suivant le plan VI de la figure 5 ;
- la figure 7 et la figure 8 sont des vues schématiques, respectivement en perspective et de côté, d'une étape de positionnement de l'obturateur dans le véhicule automobile ;
- la figure 9 et la figure 10 sont des vues schématiques, respectivement de côté et en perspective, d'une étape de coiffage ;
- la figure 11 est une vue schématique en perspective de l'habitacle du véhicule automobile après l'étape de coiffage ;
- la figure 12 est une vue schématique en perspective d'une étape de désolidarisation de l'obturateur et de l'outil de guidage ;
- la figure 13 est une représentation schématique de différentes étapes d'un procédé de montage du câble conducteur reliant deux batteries disposées, l'une à l'extérieure et l'autre à l'intérieur de l'habitacle du véhicule automobile.

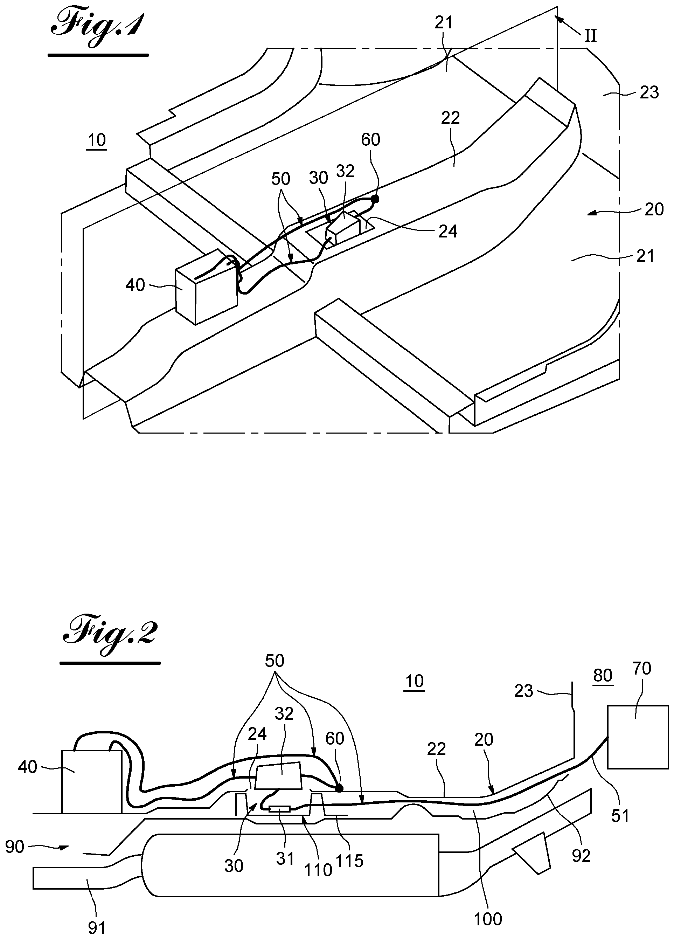

La figure 1 représente un habitacle **10** d'un véhicule automobile comprenant une surface **20** structurée inférieure d'une caisse du véhicule, la surface **20** structurée délimitant en partie l'habitacle **10**, un élément **30** électrique ou électronique, une batterie **40** interne disposé dans l'habitacle **10** et des câbles **50** électriques reliant l'élément **30** électrique et la batterie **40** interne. L'un des câbles **50** électriques passe par une masse **60** du véhicule.

La figure 2 illustre une vue en coupe de la figure 1 suivant le plan II. Sur la figure 2 est représenté, en plus des éléments de la figure 1, une batterie **70** externe disposée dans un compartiment **80** moteur du véhicule, en dehors de l'habitacle **10**, et un environnement **90** sous caisse disposé sous la surface **20** structurée. L'environnement **90** sous caisse comporte un conduit **91** d'échappement et un écran **92** thermique disposé entre la surface **20** structurée et le conduit **91** d'échappement afin de minimiser les échanges thermiques entre le conduit **91** d'échappement et l'habitacle **10**.

Le véhicule automobile comprend une plateforme modulaire comportant la surface **20** structurée et l'environnement **90** sous caisse. La plateforme modulaire permet le montage d'un véhicule hybride comprenant un moteur thermique et un moteur électrique (rechargeable ou non) ou d'un véhicule comprenant un moteur électrique.

Selon le mode de réalisation représenté, la surface **20** structurée comprend un plancher **21**, une saillie **22** longitudinale s'avançant à l'intérieur de l'habitacle **10**, et un tablier **23** avant séparant l'habitacle **10** et le compartiment **80** moteur. La saillie **22** longitudinale sépare le plancher **21** en deux moitiés.

La saillie **22** longitudinale s'étend sensiblement depuis le compartiment **80** moteur, à travers le tablier **23** avant, vers l'arrière du véhicule. La saillie **22** longitudinale crée ainsi un trou dans le tablier **23** avant présentant sensiblement la forme d'une section transversale de la saillie **22** longitudinale.

La saillie **22** longitudinale comprend une ouverture **24** réalisée suivant une direction sensiblement perpendiculaire à la direction dans laquelle s'étend la saillie 22 longitudinale créant ainsi un passage entre l'habitacle **10** et le compartiment **80** moteur par le biais d'un tunnel **100**, défini par la saillie **22** longitudinale, entre la surface **20** structurée et l'écran **92** thermique.

Dans le mode de réalisation représenté, en particulier sur la figure 2, la batterie **40** interne et la batterie **70** externe sont reliées, grâce aux câbles **50** électriques, par le biais de l'élément **30** électrique. Les câbles **50** électriques comprennent un câble **51** conducteur passant dans le tunnel **100** de sorte à relier la batterie **70** externe et l'élément **30** électrique.

Selon le mode de réalisation illustré sur la figure 2, l'élément **30** électrique comprend un fusible **31** relié à la batterie **70** externe par le câble **51** conducteur et un commutateur **32** relié à la batterie **40** interne par d'autres desdits câbles **50** électriques. Le commutateur **32** permet, selon le mode de réalisation décrit, une sélection, pour alimenter le moteur électrique du véhicule, de la batterie **40** interne ou de la batterie **70** externe.

Comme représenté sur la figure 2, le véhicule comprend également un obturateur **110** disposé entre la surface **20** structurée et l'écran **92** thermique. L'obturateur **110** est disposé, lorsque le véhicule automobile est assemblé, au niveau de l'ouverture **24** de la saillie **22** longitudinale.

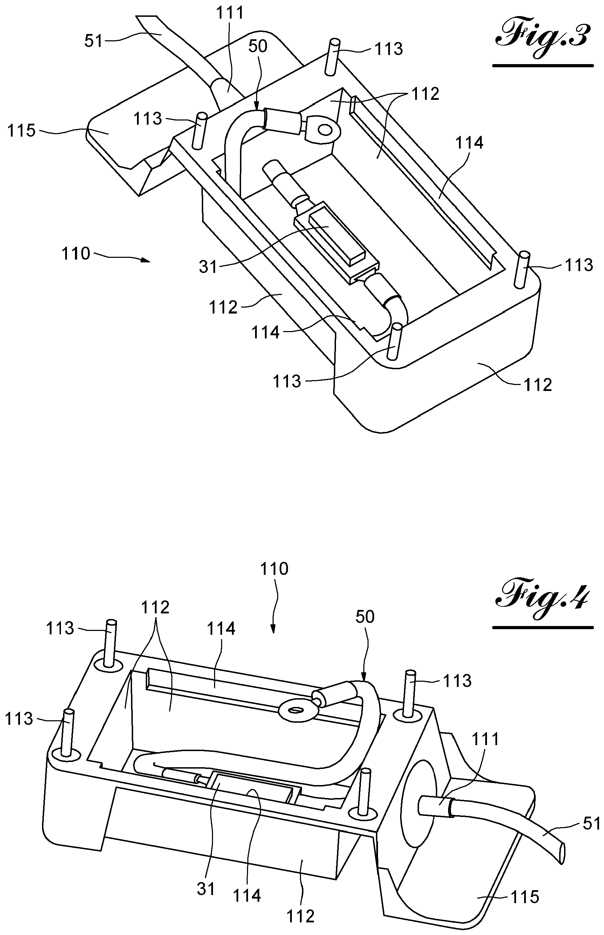

Dans le mode de réalisation illustré sur les figures 3 et 4, l'obturateur **110** comprend un passe-gaine **111** par lequel le câble **51** conducteur traverse l'obturateur **110** de sorte à accéder à l'habitacle **10** tout en minimisant la remontée de bruits dans l'habitacle **10**.

L'obturateur **110** comprend des parois **112** définissant une forme creuse orientée vers l'habitacle **10**. Ainsi, la forme de l'obturateur **110** permet d'y insérer, au moins en partie, l'élément **30** électrique afin de conserver le plus grand volume possible pour l'habitacle **10.**

Le passe-gaine **111** traverse une des parois **112** de l'obturateur **110.** Au niveau de ladite paroi **112**, le passe-gaine **111** définit une direction de traversée du câble **51** conducteur sensiblement parallèle à la direction définie par la saillie **22** longitudinale aux abords de l'ouverture **24** afin de maximiser le volume disponible dans l'habitacle **10.**

L'obturateur **110** présente une forme complémentaire à l'ouverture **24** destinée à obturer l'ouverture **24** et l'obturateur **110** est disposé au contact de la surface **20** structurée réduisant une remontée de bruits dans l'habitacle **10** du véhicule.

L'obturateur **110** comprend des moyens **113** de fixation aptes à coopérer avec des fixations (non représentées) de la surface **20** structurée. De tels moyens **113** de fixation maintiennent en contact l'obturateur **110** et la saillie **22** longitudinale, sur tout le tour de l'ouverture **24.**

Selon le mode de réalisation représenté, les moyens **113** de fixation sont des vis destinées à coopérer avec des écrous (non illustrés).

Lors de l'assemblage du véhicule, l'opération consistant à faire accoster la surface **20** structurée avec l'environnement **90** sous caisse est appelée le coiffage.

Afin de guider l'obturateur **110** par rapport à l'ouverture **24** lors du coiffage, un outil **120** de guidage est posé sur l'obturateur **110.**

L'outil **120** de guidage comprend une base **121** destinée à être en contact avec l'obturateur **110** et une tête **122** disposée à l'opposé de la base **121** par rapport à l'obturateur **110**. La tête **122** et la base **121** présentent, en section transversale, une forme apte à passer à travers l'ouverture **24**. La dimension de la tête **122**, en section transversale, est inférieure à la dimension de la base **121**, en section transversale, et l'outil **120** de guidage présente une forme allant en s'évasant depuis la tête **122** jusqu'à la base **121** facilitant une introduction de la tête **122** dans l'ouverture **24** et un guidage de l'obturateur **110** par rapport à l'ouverture **24** lors du coiffage.

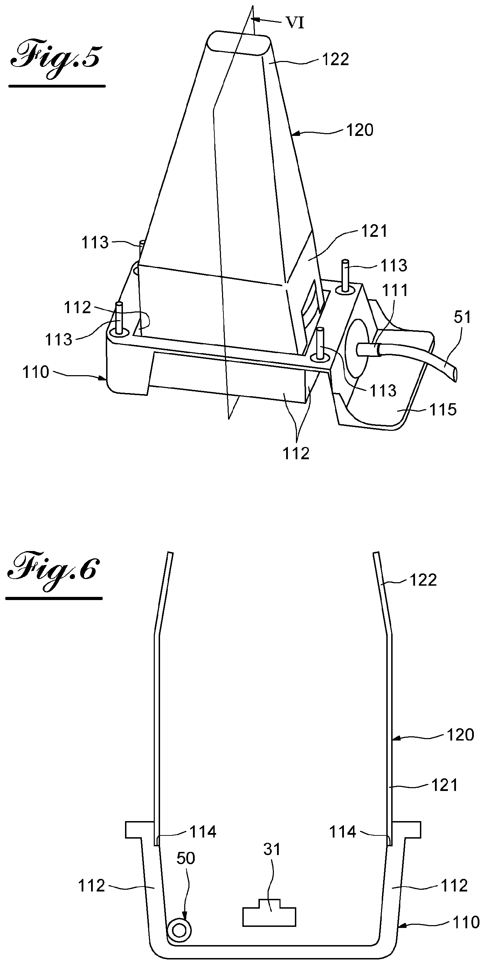

Selon le mode de réalisation illustré, l'outil **120** de guidage est posé sur l'obturateur **110**. L'obturateur **110** comprend des encoches **114**, visibles sur les figures 3, 4, 6 et 12, configurées pour recevoir la base **121** de l'outil **120** de guidage.

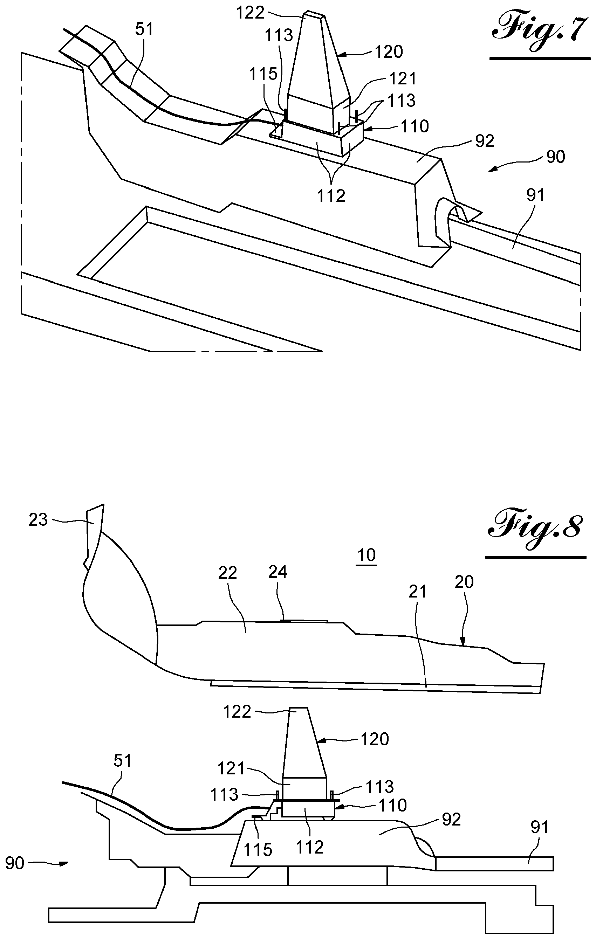

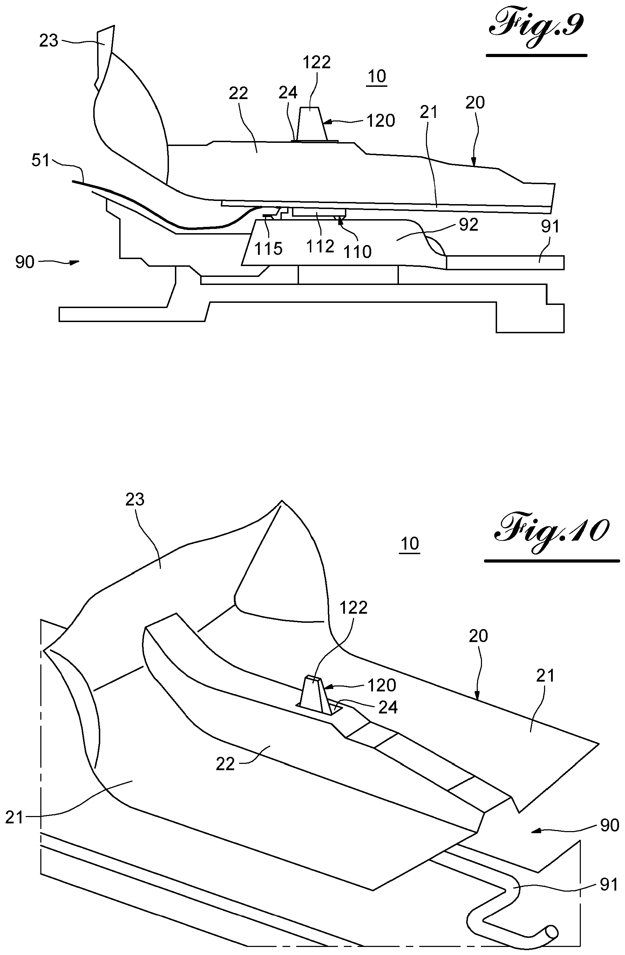

Un procédé **1000** de montage du câble **51** conducteur reliant la batterie **40** interne et la batterie **70** externe, illustré sur les figures 7 à 13, comprend :
- une étape **1001** de positionnement de l'obturateur **110** sur l'environnement **90** sous caisse ; selon le mode de réalisation représenté, l'obturateur **110** comprend, du côté de la paroi **112** traversée par le passe-gaine **111**, un pied 115 en saillie en direction du câble **51** conducteur, le pied 115 améliorant la stabilité de l'obturateur **110** lorsque ce dernier est posé sur l'écran **92** thermique de l'environnement **90** sous caisse ; dans un mode de réalisation non représenté, le pied 115 comprend des lumières permettant de réduire la masse de l'obturateur **110** ;
- une étape **1003** de coiffage de l'environnement **90** sous caisse avec la surface **20** structurée, illustrée sur les figures 9 à 11 ; la tête **122** de l'outil **120** de guidage pénétrant dans l'ouverture **24** ; l'outil **120** de guidage guidant l'obturateur **110** par rapport à l'ouverture **24** ;
- une étape **1006** de connexion du câble **51** conducteur à la batterie **40** interne.

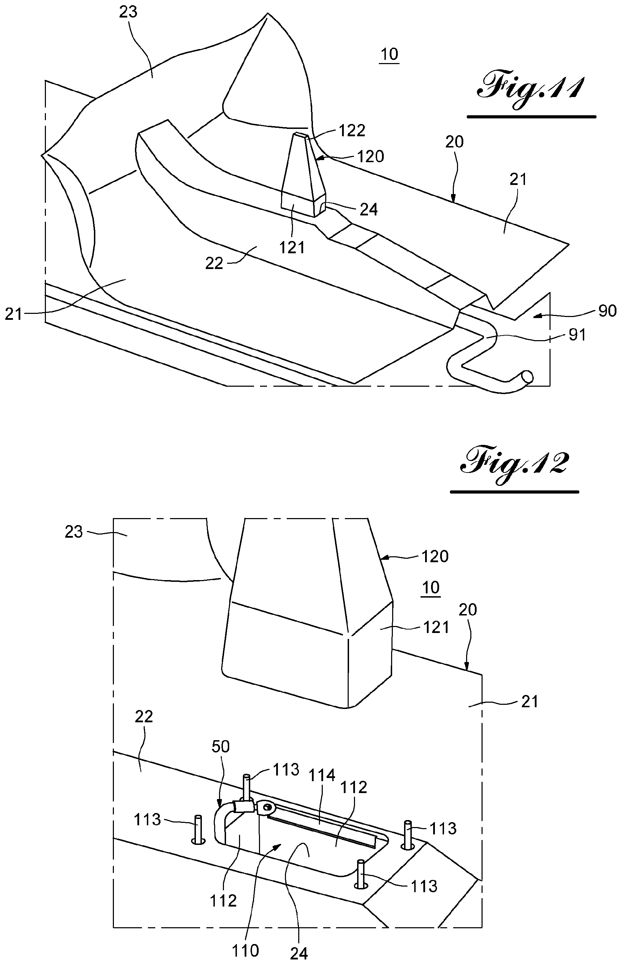

Dans le mode de réalisation représenté, le procédé **1000** de montage du câble **51** conducteur comprend :
- une étape **1002** de pose de l'outil **120** de guidage sur de l'obturateur **110**, illustrée sur les figures 7 et 8 ;
- une étape **1004** de désolidarisation de l'outil **120** de guidage et de l'obturateur, illustrée sur la figure 12 ;
- une étape **1005** de fixation de l'obturateur **110** à la surface **20** structurée, au niveau de l'ouverture **24** ;
- une étape de liaison du moteur électrique du véhicule automobile à la batterie **40** interne et à la batterie **70** externe.

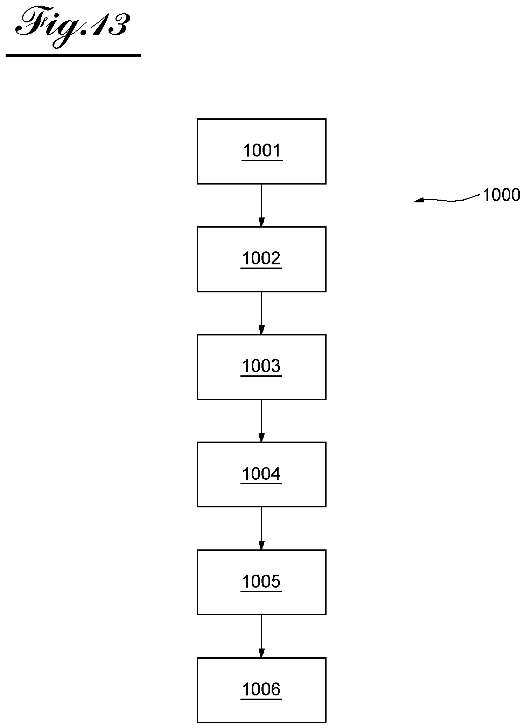

Les différentes étapes du procédé **1000** peuvent être réalisées dans un ordre différent que celui décrit ci-dessus ou que celui illustré sur la figure 13.

Selon des modes de réalisation différents, l'obturateur **110** et l'outil **120** de guidage sont conçus pour ne pas être désolidarisés et/ou sont monobloc.

Dans un mode de réalisation non représenté, l'outil **120** de guidage comprend des trous réduisant sa masse.

En variante, l'obturateur **110** est solidarisé à la surface **20** structurée, avec ou sans outil **120** de montage, manuellement par un technicien.

Selon différents modes de réalisations, l'obturateur **110** et l'outil **120** de guidage sont, indépendamment, fabriqués en matériau polymère, en matériau métallique ou en un assemblage d'un matériau polymère et d'un matériau métallique.

Un tel obturateur **110** associé à un tel outil **120** de guidage permettent de simplifier le montage d'un câble **51** conducteur reliant deux batteries **40**,**70** disposées, l'une à l'intérieur et l'autre à l'extérieur d'un habitacle **10** d'un véhicule automobile, le câble **51** conducteur traversant une ouverture **24** formée dans la saillie **22** longitudinale du véhicule automobile.

L'obturateur **110** permet de réduire les remontées de bruits dans l'habitacle **10** du véhicule ainsi que d'augmenter l'autonomie d'un véhicule hybride ou électrique sans réduire les volumes disponibles dans le compartiment moteur, sous le plancher et/ou dans le coffre.

## Revendications

1. Procédé **(1000)** d'équipement d'une plateforme modulaire d'un véhicule automobile comprenant une ouverture **(24)** réservée, l'ouverture **(24)** étant réalisée dans une saillie **(22)** longitudinale d'une surface **(20)** structurée inférieure d'une caisse de la plateforme modulaire, l'ouverture **(24)** étant réalisée dans la surface **(20)** structurée suivant une direction sensiblement perpendiculaire à la direction dans laquelle s'étend la saillie **(22)** longitudinale, le procédé **(1000)** comprenant :
- une étape **(1001)** de positionnement d'un obturateur **(110)** sur un environnement **(90)** sous caisse de la plateforme modulaire ;
- une étape **(1003)** de coiffage de l'environnement **(90)** sous caisse par la surface **(20)** structurée, l'obturateur **(110)** étant guidé par rapport à l'ouverture **(24)** par un outil **(120)** de guidage ; l'outil **(120)** de guidage comprenant une base **(121)** en contact avec l'obturateur **(110)** et une tête **(122)** disposée à l'opposé de la base **(121),** l'outil **(120)** de guidage présentant une forme allant en s'évasant depuis la tête **(122)** vers la base **(121)** ; la tête **(122)** de l'outil **(120)** de guidage s'insérant en première dans l'ouverture **(24)** ;
le procédé **(1000)** étant **caractérisé en ce qu'**il comprend :
- une étape **(1006)** de connexion d'un câble **(51)** conducteur à une batterie **(40)** interne à un habitacle **(10)** du véhicule automobile de sorte que le câble **(51)** conducteur relie la batterie **(40)** interne et une batterie **(70)** externe à l'habitacle **(10)** du véhicule automobile, la batterie **(40)** interne et la batterie **(70)** externe étant disposées de part et d'autre de la surface **(20)** structurée ; l'obturateur **(110)** comprenant un passe-gaine **(111)** traversé par le câble **(51)** conducteur ; le câble **(51)** conducteur étant disposé dans un tunnel **(100)** défini par la saillie **(22)** longitudinale, le tunnel **(100)** étant disposé entre l'environnement **(90)** sous caisse et la surface **(20)** structurée ; et
- une étape de liaison d'un moteur électrique du véhicule automobile à la batterie **(40)** interne et à la batterie **(70)** externe.

2. Procédé **(1000)** d'équipement d'une plateforme modulaire selon la revendication précédente **caractérisé en ce qu'**il comprend une étape **(1002)** de pose de l'outil **(120)** de guidage sur de l'obturateur **(110).**

3. Procédé **(1000)** d'équipement d'une plateforme modulaire selon l'une quelconque des revendications précédentes **caractérisé en ce qu'**il comprend, après l'étape **(1003)** de coiffage, une étape **(1004)** de désolidarisation de l'outil **(120)** de guidage et de l'obturateur **(110)**.

4. Procédé **(1000)** d'équipement d'une plateforme modulaire selon l'une quelconque des revendications précédentes **caractérisé en ce qu'**il comprend, après l'étape **(1003)** de coiffage, une étape **(1005)** de fixation de l'obturateur **(110)** à la surface **(20)** structurée par le biais de vis de sorte que des parois de l'obturateur **(110)** obturent entièrement l'ouverture **(24)**.

5. Procédé **(1000)** d'équipement d'une plateforme modulaire selon l'une quelconque des revendications précédentes **caractérisé en ce que,** dans l'étape **(1006)** de connexion, la batterie **(40)** interne est reliée à un commutateur **(32)**, le commutateur étant destiné à sélectionner l'utilisation de la batterie **(40)** interne ou de la batterie **(70)** externe.

6. Procédé **(1000)** d'équipement d'une plateforme modulaire selon la revendication précédente **caractérisé en ce que**, dans l'étape **(1006)** de connexion, le commutateur **(32)** est protégé par un fusible **(31)**.

7. Procédé **(1000)** d'équipement d'une plateforme modulaire selon l'une quelconque des revendications précédentes **caractérisé en ce que**, avant l'étape **(1001)** de positionnement de l'obturateur **(110)**, le passe-gaine **(111)** est introduit dans une paroi **(112)** de l'obturateur **(110)** de sorte que le passe-gaine **(111)** définisse une direction sensiblement parallèle à la direction définie par la saillie **(22)** longitudinale aux abords de l'ouverture **(24)**.

8. Procédé **(1000)** d'équipement d'une plateforme modulaire selon l'une quelconque des revendications précédentes **caractérisé en ce qu'**il comprend une étape de constitution de l'environnement **(90)** sous caisse par l'assemblage d'un conduit **(91)** d'échappement et d'un écran **(92)** thermique de sorte que, après l'étape **(1003)** de coiffage, l'écran **(92)** thermique soit disposé entre le conduit **(91)** d'échappement et la surface **(20)** structurée.

9. Procédé **(1000)** d'équipement d'une plateforme modulaire selon l'une quelconque des revendications précédentes **caractérisé en ce qu'**il comprend, en amont de l'étape de liaison du moteur électrique, une étape de montage d'une motorisation entièrement électrique.

10. Procédé **(1000)** d'équipement d'une plateforme modulaire selon l'une quelconque des revendications 1 à 9 **caractérisé en ce qu'**il comprend, en amont de l'étape de liaison du moteur électrique, une étape de montage d'une motorisation hybride thermique et électrique.

## Patentansprüche

1. Verfahren (1000) zur Ausrüstung einer modularen Plattform eines Kraftfahrzeugs mit einer reservierten Öffnung (24), wobei die Öffnung (24) in einem Längsvorsprung (22) einer unteren strukturierten Oberfläche (20) eines Kastens der modularen Plattform ausgebildet wird, wobei die Öffnung (24) in der strukturierten Oberfläche (20) im Wesentlichen senkrecht zu die Richtung, in der sich der Längsvorsprung (22) erstreckt, wobei das Verfahren (1000) Folgendes umfasst:
- einen Schritt (1001) zur Positionierung eines Verschlusses (110) auf einer Umgebung (90) unter dem Kasten der modularen Plattform;
- einen Schritt (1003) zur Abdeckung der Umgebung (90) unter Kasse durch die strukturierte Oberfläche (20), wobei die Blende (110) über ein Führungswerkzeug (120) relativ zur Öffnung (24) geführt ist; Das Führungswerkzeug (120) umfasst eine Basis (121), die mit dem Verschluss (110) in Kontakt steht, und einen Kopf (122), der gegenüber der Basis (121) angeordnet ist, wobei das Führungswerkzeug (120) von dem Kopf (122) zur Basis (12) hin erweitert ist 1. der Kopf (122) des Führungswerkzeugs (120), der zuerst in die Öffnung (24) eingreift;
Verfahren (1000), **dadurch gekennzeichnet, dass** es umfasst:
- einem Schritt (1006) des Verbindens eines leitenden Kabels (51) mit einer Batterie (40) innerhalb eines Innenraums (10) des Kraftfahrzeugs, sodass das leitende Kabel (51) die innere Batterie (40) und eine externe Batterie (70) außerhalb des Innenraums (10) des Kraftfahrzeugs, die innere Batterie (40) und die Batterie verbindet (70) außen auf beiden Seiten der strukturierten Oberfläche (20) angeordnet sind; Die Blende (110) umfasst einen Kabelkanal (111), der durch das leitende Kabel (51) hindurchgeht. Das Leiterkabel (51) ist in einem durch den Längsvorsprung (22) definierten Tunnel (100) angeordnet, wobei der Tunnel (100) zwischen der unterkastenförmigen Umgebung (90) und der strukturierten Oberfläche (20) angeordnet ist. und
- einen Schritt zur Verbindung eines Elektromotors des Kraftfahrzeugs mit der inneren und der äußeren Batterie (70).

2. Verfahren (1000) zum Bestücken einer modularen Plattform nach dem vorhergehenden Anspruch, **dadurch gekennzeichnet, dass** es einen Schritt (1002) des Setzens des Führungswerkzeugs (120) auf dem Verschluss (110) umfasst.

3. Verfahren (1000) zum Bestücken einer modularen Plattform nach einem der vorhergehenden Ansprüche, **dadurch gekennzeichnet, dass** es nach dem Schritt (1003) des Frisierens einen Schritt (1004) des Lösens des Führungswerkzeugs (120) und des Verschlusses (110) umfasst.

4. Verfahren (1000) zum Bestücken einer modularen Plattform nach einem der vorhergehenden Ansprüche, **dadurch gekennzeichnet, dass** es nach dem Schritt (1003) zum Frisieren einen Schritt (1005) zum Befestigen des Verschlusses (110) an der Oberfläche (20) umfasst, die durch Schrauben so strukturiert ist, dass Wände des Verschlusses (110) die Öffnung (24) vollständig schließen.

5. Verfahren (1000) zum Bestücken einer modularen Plattform nach einem der vorhergehenden Ansprüche, **dadurch gekennzeichnet, dass** in dem Verbindungsschritt (1006) die interne Batterie (40) mit einem Schalter (32) verbunden ist, wobei der Schalter dazu dient, die Verwendung der internen Batterie (40) oder der externen Batterie (70) auszuwählen.

6. Verfahren (1000) zur Ausrüstung einer modularen Plattform nach dem vorhergehenden Anspruch, **dadurch gekennzeichnet, dass** der Schalter (32) in dem Verbindungsschritt (1006) durch eine Sicherung (31) geschützt wird.

7. Verfahren (1000) zum Bestücken einer modularen Plattform nach einem der vorhergehenden Ansprüche, **dadurch gekennzeichnet, dass** vor dem Schritt (1001) des Positionierens des Verschlusses (110) der Hülsenpass (111) in eine Wand (112) des Verschlusses (110) eingeführt wird, sodass der Hülsenpass (111) eine Richtung definiert, die im Wesentlichen parallel zu der Richtung verläuft, die der Längsvorsprung (22) in der Nähe der Öffnung (24) definiert.

8. Verfahren (1000) zum Bestücken einer modularen Plattform nach einem der vorhergehenden Ansprüche, **dadurch gekennzeichnet, dass** es einen Schritt des Herstellens der Umgebung (90) unter dem Kasten durch Zusammenfügen einer Abgasleitung (91) und einer thermischen Abschirmung (92) umfasst, sodass nach dem Schritt (1003) des Abdeckens die Abschirmung (92) thermisch zwischen der Abgasleitung (91) und der strukturierten Oberfläche (20) angeordnet ist.

9. Verfahren (1000) zum Bestücken einer modularen Plattform nach einem der vorhergehenden Ansprüche, **dadurch gekennzeichnet, dass** es vor dem Schritt des Verbindens des Elektromotors einen Schritt des Montierens eines vollständig elektrischen Motors umfasst.

10. Verfahren (1000) zum Bestücken einer modularen Plattform nach einem der Ansprüche 1 bis 9, **dadurch gekennzeichnet, dass** es vor dem Schritt des Verbindens des Elektromotors einen Schritt des Montierens einer thermischen und elektrischen Hybridantriebsvorrichtung umfasst.

## Claims

1. Process (1000) of equipment of a modular platform of a motor vehicle comprising a reserved opening (24), the opening (24) being carried out in a longitudinal projection (22) of a lower structured surface (20) of a body of the modular platform, the opening (24) being carried out in the structured surface (20) following a structured surface management substantially perpendicular to the management in which the longitudinal projection (22) extends, the process (1000) comprising:
- a step (1001) of positioning a shutter (110) on an environment (90) under the body of the modular platform;
- a step (1003) of styling of the environment (90) under the body by the structured surface (20), the shutter (110) being guided by report at the opening (24) by a guiding tool (120); the guide tool (120) comprising a base (121) in contact with the shutter (110) and a head (122) lying opposite the base (121), the guide tool (120) in a shape that escapes from the head (122) to the base (121); the head (122) of the tool (120) of guidance which is placed first in the opening (24);
the process (1000) is characterized as:
- one step (1006) of connecting a driver cable (51) to an internal battery (40) to an interior compartment (10) of the motor vehicle so that the driver cable (51) connects the internal battery (40) and an external battery (70) to the passenger compartment (10) of the motor vehicle, the internal battery (40) and the battery (70) external being arranged on both sides of the structured surface (20); the shutter (110) containing a sheath (111) crossed by the conductor cable (51); the conductor cable (51) being placed in a tunnel (100) defined by the longitudinal projection (22), the tunnel (100) being placed between the undercarriage environment (90) and the structured surface (20); and
- a connection stage of an electric motor of the motor vehicle to the internal battery (40) and the external battery (70).

2. Process (1000) of equipment of a modular platform according to the previous claim characterized as it includes a stage (1002) of laying the tool (120) of guidance on the shutter (110).

3. Process (1000) of equipment of a modular platform according to any of the previous claims **characterized in that** it includes, after the styling stage (1003), a stage (1004) of decoupling of the tool (120) of guidance and the shutter (110).

4. Process (1000) of equipment of a modular platform according to any of the previous claims **characterized in that** it includes, after the styling stage (1003), a staging stage (1005) of fixing the shutter (110) to the surface (20) structured by screws so that the walls the shutter (110) completely shut off the opening (24).

5. Process (1000) of equipment of a modular platform according to any of the previous claims **characterized by** that, in the connection step (1006), the internal battery (40) is connected to a switch (32), the switch being intended to select the use of the internal battery (40) or the external battery (70).

6. Process (1000) of equipment of a modular platform according to the previous claim characterized that, in the connection step (1006), the switch (32) is protected by a fuse (31).

7. Process (1000) of equipment of a modular platform according to any of the previous claims **characterized in that**, before the step (1001) of positioning the shutter (110), the sheath (111) is introduced into a wall (112) of the shutter (110) so that the sheath (111) defines a management substantially parallel to the management defined by the longitudinal projection (22) near the opening (24).

8. Process (1000) of equipment of a modular platform in accordance with any of the previous claims characterized as it includes a stage of incorporation of the environment (90) under the body by assembling an exhaust duct (91) and a thermal screen (92) so that, after the styling stage (1003), the (92) thermal display is placed between the exhaust duct (91) and the structured surface (20).

9. Process (1000) of equipment of a modular platform according to any of the previous claims **characterized in that** it includes, upstream the connection stage of the electric motor, a stage of assembly line of a fully electric motor.

10. Process (1000) of equipment of a modular platform in accordance with any of Claims 1 to 9 **characterized in that** it includes, upstream the electric motor link stage, a stage of assembly line of a hybrid thermal and electric motor.
